(19) Europäisches Patentamt

European Patent Office

Office européen des brevets

(11) **EP 0 787 763 B1**

(12) **FASCICULE DE BREVET EUROPEEN**

(45) Date de publication et mention
de la délivrance du brevet:
**02.06.2004 Bulletin 2004/23**

(51) Int Cl.⁷: **C08J 5/12**
// C08L33:12

(21) Numéro de dépôt: **97400087.9**

(22) Date de dépôt: **16.01.1997**

(54) **Composition adhésive pour materiaux en (co)polymère (méth)acrylique**

Klebstoffzusammensetzung für Methacrylat-Copolymere

Adhesive composition for (meth)acrylate copolymers

(84) Etats contractants désignés:
**AT BE CH DE ES FR GB IT LI NL**

(30) Priorité: **31.01.1996 FR 9601119**

(43) Date de publication de la demande:
**06.08.1997 Bulletin 1997/32**

(73) Titulaire: **Atofina**
**92800 Puteaux (FR)**

(72) Inventeurs:
• **Bruneau, Jean-Michel**
**27140 Gisors (FR)**
• **Heim, Philippe**
**64000 Pau (FR)**
• **Magne, Jacques**
**27140 Gisors (FR)**

(74) Mandataire: **Granet, Pierre**
**Atofina,**
**Département Propriété Industrielle,**
**4-8, cours Michelet,**
**La Défense 10**
**92091 Paris La Défense Cedex (FR)**

(56) Documents cités:
EP-A- 0 571 264          DD-A- 59 169
DE-A- 4 413 002          US-A- 4 224 097

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention est relative à une composition adhésive pour des matières synthétiques à base de (co) polymère (méth)acrylique, dérivant de 80 à 100 % en poids de méthacrylate de méthyle (MAM) et de 0 à 20 % en poids d'au moins un monomère à insaturation éthylénique copolymérisable avec le méthacrylate de méthyle.

Les polymères (méth)acryliques, en particulier le polyméthacrylate de méthyle et les copolymères de méthacrylate de méthyle et d'au moins un monomère à insaturation éthylénique en quantité généralement inférieure à 20 % en poids, présentent des propriétés qui les rendent particulièrement utilisables industriellement. Ainsi, outre leur thermoplasticité, leur résistance mécanique élevée, leur excellente tenue au vieillissement, à la corrosion et aux agents atmosphériques, ils présentent des propriétés optiques exceptionnelles (transmission de la lumière, limpidité, brillance).

Ces matières polymères peuvent être utilisées pour fabriquer des articles. Ces articles, sous forme de plaques obtenues par coulée, extrusion ou façonnés par extrusion ou injection, peuvent être découpés, polis, collés, soudés, pliés.

Pour fabriquer des articles en polymères (méth)acryliques, il est nécessaire d'avoir des colles adaptées à ces produits.

Il est connu d'utiliser, comme colle, des solvants organiques volatils du polymère tels que des solvants chlorés, qui ont la propriété de gonfler ou de dissoudre en surface les polymères à coller ; après évaporation du solvant, le collage est assuré par la matière elle-même du polymère à coller.

On a aussi utilisé des colles solvants qui sont des mélanges de solvants du polymère et d'une quantité plus ou moins élevée de polymère (méth)acrylique dissous. La présence de polymère dissous permet de retarder l'évaporation du solvant et, donc, de permettre de mieux ajuster les pièces à coller. Après l'évaporation du solvant, c'est le polymère provenant de la colle qui assure le collage.

Cependant, l'évaporation du solvant crée des manques de matières qui se concrétisent par la formation de bulles ou de tensions préjudiciables à la bonne tenue mécanique ou à l'esthétique de l'objet ou article final.

Les collages doivent être de haute qualité et rester pratiquement invisibles de manière à conserver le bon aspect de l'objet final et, en outre, ils doivent avoir une résistance à la traction suffisante pour que l'objet puisse supporter des contraintes mécaniques.

Dans le cas du polyméthacrylate de méthyle, la résistance en traction est de l'ordre de 75MPa. Pour être satisfaisant, le joint de collage doit présenter une résistance à la traction d'au moins 30MPa environ.

Pour obtenir un collage satisfaisant, il faut donc que le solvant de la composition adhésive puisse détremper et dissoudre (ou gonfler) suffisamment la surface de la matière polymère pour conférer au joint de collage de bonnes caractéristiques de résistance à la rupture. L'action du solvant ne doit pas entraîner des défauts dans les pièces, comme des craquelures. En outre, le solvant doit s'évaporer rapidement pour que la pièce collée soit aussitôt manipulable par l'utilisateur, mais pas trop vite pour permettre, comme déjà indiqué, de bien ajuster les pièces à coller. Le joint de collage en lui-même doit être limpide et ne pas présenter de défauts d'aspect, comme des bulles provenant du retrait de la colle, provoqué par le séchage.

Les solvants généralement utilisés sont des solvants chlorés, comme le dichloroéthane et le dichlorométhane. Ils donnent d'excellents résultats, mais présentent l'inconvénient d'être toxiques.

L'invention a donc pour objet une composition adhésive pour (co)polymères (méth)acryliques (A) dérivant de 80 à 100 % en poids de méthacrylate de méthyle et de 0 à 20 % en poids d'au moins un monomère à insaturation éthylénique copolymérisable avec le méthacrylate de méthyle, composition qui ne contient pas de solvants toxiques et qui répond aux exigences précédemment mentionnées afin d'obtenir des joints de collage souhaités.

La composition adhésive selon l'invention comprend, en poids, 45 à 90 % de 1,3-dioxolane, de 2 à 25 % d'acide formique ou de mono-, di- ou tétraglyme, de 2 à 30 % de (co)polymère (méth)acrylique (B) dissous et de 0 à 40 % d'additifs diluants organiques, solvants ou non de la matière polymère à coller.

D'une manière préférée, la composition adhésive comprend, en poids, de 60 à 85 % de 1,3-dioxolane, 3 à 20 % d'acide formique ou de mono- di- ou tétraglyme, 10 à 16 % de (co)polymère (méth)acrylique (B) dissous et 10 à 40 % d'additifs diluants.

Le rôle du composé 1,3-dioxolane est de détremper les surfaces des articles en (co)polymères (méth)acryliques à coller pour permettre une bonne adhérence du joint de collage. Il sert aussi, lors de la préparation de la colle, à dissoudre le (co)polymère (méth) acrylique (B) ajouté.

L'acide formique et le mono-, di- ou tétraglyme jouent le rôle de retardateur d'évaporation pour le 1,3-dioxolane et augmentent l'adhérence du joint de collage.

Comme indiqué précédemment, l'ajout de (co) polymère (méth)acrylique (B), généralement sous forme de perles ou de granulés, de masse moléculaire moyenne en poids inférieure à 1.000.000 et de préférence comprise entre 50 000 et 1 000 000 et, en particulier entre 500 000 et 700 000, permet de retarder l'évaporation du solvant et, donc, de mieux contrôler l'assemblage des pièces et l'application de la colle. Il sert aussi, en tant que matière polymère, à pallier à des insuffisances de matière dans l'article à coller. Ces (co) polymères (méth)acryliques sont généralement formés d'homopolymères de méthacrylate de méthyle ou de copolymères du méthacrylate de méthyle et d'acrylate d'alkyle dans lequel le groupe alkyle a de 1 à 10 atomes de carbone. Ces copolymères contiennent généralement moins de 20 % en poids d'acrylate d'alkyle.

Comme autres additifs, on peut citer des additifs diluants qui sont des solvants ou non du polymère à coller, comme des cétones, des éthers, des alcools ou des esters tels que la méthyléthylcétone, la méthylisobutylcétone, l'acétone, le diacétone alcool, le diméthoxyméthane, l'acétate de méthyle, l'acétate d'éthyle, l'acétate de butyle ou d'isobutyle, le phtalate de méthyle, le formiate d'éthyle et le butanol.

Ces additifs ont pour fonction de favoriser la dissolution, de retarder l'évaporation afin d'obtenir un joint de collage régulier et lisse. Ils peuvent aussi empêcher la formation d'un film superficiel qui nuirait à l'évaporation des solvants.

La quantité de (co)polymère (méth)acrylique (B) dissous dans la composition adhésive dépend de l'utilisation finale de cette composition. Pour certaines applications, la composition adhésive doit pouvoir être introduite par capillarité dans l'interstice devant former le joint. Elle doit être suffisamment fluide pour mouiller correctement la surface à coller, mais être assez visqueuse pour retarder l'évaporation des solvants qui doivent détremper et dissoudre ou gonfler la matière à coller de façon à assurer un collage approprié et ainsi une bonne résistance à la traction du joint de collage final. La viscosité de la composition adhésive est généralement comprise entre 0,1 et 5 Pa.s.

Les polymères (méth)acryliques (A) que l'on peut coller avec la composition selon l'invention comprennent notamment l'homopolymère de méthacrylate de méthyle et des copolymères de méthacrylate de méthyle et d'au moins un monomère à insaturation éthylénique copolymérisable avec le méthacrylate de méthyle en quantité généralement inférieure à 20 % en poids. Comme monomères à insaturation éthylénique, on peut citer les acrylates d'alkyle dans lesquels le groupe alkyle a de 1 à 10 atomes de carbone, tels que acrylate de méthyle, d'éthyle, de n-butyle, de 2-ethylhexyle, d'isobutyle, le styrène, les styrènes substitués comme l'α-méthylstyrène, l'acrylonitrile, le méthacrylonitrile, les méthacrylates d'alkyle en $C_2$-$C_8$, les acrylates et méthacrylates d'hydroxyalkyle inférieur ($C_1$ à $C_5$), les acrylates d'alkoxy inférieur, l'acrylamide, l'acide acrylique ou méthacrylique, les maléimides.

Les matériaux en (co)polymère (méth)acrylique à coller peuvent être obtenus par coulée, extrusion ou injection, d'une manière connue en soi.

Les exemples suivants, donnés à titre d'exemple, servent à illustrer l'invention.

L'évaluation des collages est effectuée par traction sur des éprouvettes constituées par deux parties en polymère (méth)acrylique collées bout à bout. La résistance à la traction du joint de collage est mesurée selon la norme ISO 527.

**Exemple 1** : Pour assembler deux plaquettes en polyméthacrylate de méthyle coulé de format 100x300x5 mm par leur grand côté, on applique un joint de collage d'environ 5/10 mm d'épaisseur entre les deux faces à coller. La colle est constituée, en poids, par 80 % de 1,3-dioxolane, 9 % d'acide formique et 11 % de polyméthacrylate de méthyle dissous ($\overline{Mw}$ = 500.000). L'assemblage est manipulable après une dizaine de minutes. Après 10 jours d'entreposage, il est découpé en éprouvettes de 8x15x5 mm selon la norme ISO 527. La résistance en traction est de 34 MPa.

**Exemple 2** : Le même essai qu'à l'exemple 1 est effectué avec une composition adhésive contenant, en poids, 63,5 % de 1,3-dioxolane, 4,5 % d'acide formique, 20 % d'acétate de méthyle et 12 % de polyméthacrylate de méthyle ($\overline{Mw}$ = 500.000) dissous. La résistance en traction est de 38 MPa.

**Exemple 3** : Le même essai qu'à l'exemple 1 est effectué avec une composition adhésive contenant, en poids, 69 % de 1,3-dioxolane, 20 % de diglyme et 11 % de polyméthacrylate de méthyle ($\overline{Mw}$ = 500.000). La résistance en traction est de 35 MPa.

Dans les trois cas, le joint de collage apparaît limpide, sans bulles et parfaitement lisse.

**Exemple 4** : Comparaison

A titre de comparaison, on colle deux plaquettes de polyméthacrylate de méthyle coulé, comme à l'exemple 1, mais on utilise une composition de collage comprenant, en poids, 89 % de 1,3-dioxolane et 11 % de polyméthacrylate de méthyle dissous (($\overline{Mw}$ = 500.000). La résistance en traction est de 22 MPa. Il se forme un film de polymère à la surface du joint de colle qui ralentit le séchage. On observe un retrait de bord autour du joint.

**Exemple 5** : Comparaison

On opère comme à l'exemple 1, mais on utilise une composition de collage comprenant, en poids, 91 % de 1,3-dioxolane et 9 % d'acide formique. La résistance en traction est de 20MPa. On observe un retrait à différents endroits du collage.

**Exemple 6** : Comparaison

On opère comme à l'exemple 1, mais on utilise une composition de collage comprenant uniquement du 1,3-dioxolane. La résistance en traction est de 15 MPa. L'aspect n'est pas bon (retraits à plusieurs endroits).

**Revendications**

1. Composition adhésive pour (co)polymère (méth) acrylique (A) dérivant de 80 à 100 % en poids de monomère méthacrylate de méthyle et de 0 à 20 % en poids d'au moins un monomère à insaturation éthylénique copolymérisable avec le méthacrylate de méthyle, **caractérisée en ce qu'**elle comprend, en poids, de 45 à 90 % de 1,3-dioxolane, de 2 à 25 % d'acide formique ou de mono-, di- ou tétraglyme, de 2 à 30 % de (co)polymère (méth)acrylique (B) dissous et de 0 à 40 % d'additifs diluants organiques.

2. Composition selon la revendication 1, **caractérisée en ce qu'**elle comprend, en poids, 60 à 85 % de 1,3-dioxolane, 3 à 20 % d'acide formique ou de mono-, di ou tétraglyme, 10 à 16 % de (co)polymère (méth)acrylique (B) dissous et 10 à 40 % d'additifs diluants organiques.

3. Composition conforme à l'une des revendications 1 et 2 **caractérisée en ce que** les additifs diluants sont choisis parmi des cétones, éthers, alcools ou esters solvants ou non du (co)polymère (A) à coller.

4. Composition conforme à la revendication 3 **caractérisée en ce que** les additifs diluants sont choisis parmi la méthyléthylcétone, la méthylisobutylcétone, l'acétone, le diacétone alcool, le diméthoxyméthane, l'acétate de méthyle, l'acétate d'éthyle, l'acétate de butyle, l'acétate d'isobutyle, le phtalate de méthyle, le formiate d'éthyle et le butanol.

5. Composition conforme à l'une des revendications 1 et 2, **caractérisée en ce que** le (co)polymère dissous (B) est du polyméthacrylate de méthyle ou un (co)polymère de méthacrylate de méthyle et d'au moins un monomère acrylate d'alkyle dans lequel le groupe alkyle a de 1 à 10 atomes de carbone, de masse moléculaire moyenne en poids inférieure à 1 000 000, de préférence comprise entre 500 000 et 1 000 000, et particulièrement entre 500 000 et 700 000.

6. Composition conforme à l'une quelconque des revendications 1 à 5, **caractérisée en ce qu'**elle a une viscosité comprise entre 0,1 et 5 Pa.s.

## Patentansprüche

1. Klebstoffzusammensetzung für (Meth)acrylat-(Co)polymere (A), hergeleitet aus 80 bis 100 Gewichtsprozent Methacrylsäuremethylester-Monomer und 0 bis 20 Gewichtsprozent von mindestens einem an Ethylen ungesättigten Monomer, copolymerisierbar mit Methacrylsäuremethylester, **dadurch gekennzeichnet, dass** sie, in Gewicht, aus 45 bis 90 % 1,3-Dioxolan, aus 2 bis 25 % Ameisensäure oder Mono-, Di- oder Tetraglyme, aus 2 bis 30 % aufgelöstem (Meth)acryl-(Co)polymer (B) und aus 0 bis 40 % organischen Lösungsmittelzusätzen besteht.

2. Zusammensetzung nach Anspruch 1, **dadurch gekennzeichnet, dass** sie, in Gewicht, aus 60 bis 85 % 1,3-Dioxolan, 3 bis 20 % Ameisensäure oder Mono-, Di- oder Tetraglyme, 10 bis 16 % aufgelöstem (Meth)acryl-(Co)polymer (B) und 10 bis 40 % organischen Lösungsmittelzusätzen besteht.

3. Zusammensetzung nach einem der Ansprüche 1 und 2, **dadurch gekennzeichnet, dass** die Lösungsmittelzusätze ausgewählt sind unter Cetonen, Ethern, Alkoholen oder lösenden oder nicht lösenden Estern des zu klebenden (Co)polymers (A).

4. Zusammensetzung nach Anspruch 3, **dadurch gekennzeichnet, dass** die Lösungsmittelzusätze ausgewählt sind unter Methylethylceton, Methylisobutylceton, Aceton, Diacetonalkohol, Dimethoxymethan, Methylacetat, Ethylacetat, Butylacetat, Isobutylacetat, Methylphtalat, Ethylformiat und Butanol.

5. Zusammensetzung nach einem der Ansprüche 1 und 2, **dadurch gekennzeichnet, dass** das aufgelöste (Co)polymer (B) Polymethylmethacrylat oder ein (Co)polymer von Methacrylsäuremethylester und von mindestens einem Alkylacrylat-Monomer ist, in welchem die Alkylgruppe 1 bis 10 Kohlenstoffatome mit einer durchschnittlichen molaren Masse in Gewicht unter 1 000 000, vorzugsweise zwischen 500 000 und 1 000 000 und insbesondere zwischen 500 000 und 700 000 hat.

6. Zusammensetzung nach einem der Ansprüche 1 bis 5, **dadurch gekennzeichnet, dass** sie eine Viskosität zwischen 0,1 und 5 Pa.s. hat.

## Claims

1. Adhesive composition for (meth)acrylic (co)polymer (A) derived from 80 to 100 % by weight of methyl methacrylate monomer and from 0 to 20 % by weight of at least one monomer containing ethylenic unsaturation which is copolymerizable with the methyl methacrylate, **characterized in that** it comprises, by weight, from 45 to 90 % of 1,3-dioxolane, from 2 to 25 % of formic acid or of mono-, di- or tetraglyme, from 2 to 30 % of dissolved (meth)acrylic (co)polymer (B) and from 0 to 40 % of organic diluent additives.

2. Composition according to Claim 1, **characterized in that** it comprises, by weight, 60 to 85 % of 1,3-dioxolane, 3 to 20 % of formic acid or of mono-, di- or tetraglyme, 10 to 16 % of dissolved (meth)acrylic (co)polymer (B) and 10 to 40 % of organic diluent additives.

**EP 0 787 763 B1**

3. Composition in accordance with one of Claims 1 and 2, **characterized in that** the diluent additives are chosen from ketones, ethers, alcohols or esters which are or are not solvents for the (co)polymer (A) to be adhesively bonded.

4. Composition in accordance with Claim 3, **characterized in that** the diluent additives are chosen from methyl ethyl ketone, methyl isobutyl ketone, acetone, diacetone alcohol, dimethoxymethane, methyl acetate, ethyl acetate, butyl acetate, isobutyl acetate, methyl phthalate, ethyl formate and butanol.

5. Composition in accordance with one of Claims 1 and 2, **characterized in that** the dissolved (co)polymer (B) is polymethyl methacrylate or a (co)polymer of methyl methacrylate and of at least one alkyl acrylate monomer in which the alkyl group has from 1 to 10 carbon atoms, of weight-average molecular mass less than 1,000,000, preferably of between 500,000 and 1,000,000 and, particularly between 500,000 and 700,000.

6. Composition in accordance with any one of Claims 1 to 5, **characterized in that** it has a viscosity of between 0.1 and 5 PaAs.